# EUROPEAN PATENT SPECIFICATION

(11) **EP 2 907 340 B1**
(45) Date of publication and mention of the grant of the patent: **12.06.2019**
(21) Application number: 12773310.3
(22) Date of filing: 12.10.2012
(51) Int. Cl.: H04W 76/20, H04W 24/02, H04W 24/08, H04W 28/08, H04W 8/18, H04W 72/04, H04W 72/08, H04W 84/04

(54) **METHOD AND APPARATUS FOR INDIVIDUALLY CONTROLLING A USER EQUIPMENT IN ORDER TO OPTIMISE THE QUALITY OF EXPERIENCE (QOE)**
VERFAHREN UND VORRICHTUNG FÜR DIE INDIVIDUELLE STEUERUNG VON TEILNEHMERENDGERÄTEN ZUR OPTIMIERUNG DER ERFAHRUNGSQUALITÄT (QOE)
PROCÉDÉ ET DISPOSITIVE POUR CONTRÔLLER INDIVIDUELLEMENT UN EQUIPEMENT UTILISATEUR AFIN D'OPTIMISER LA QUALITÉ D'EXPÉRIENCE (QOE)

(43) Date of publication of application: 19.08.2015
(73) Proprietor: Nokia Solutions and Networks Oy, 02610 Espoo (FI)
(72) Inventor: HAMALAINEN, Seppo Olavi, FI-02140 Espoo (FI); TEITTINEN, Veli-Matti, FI-02880 Veikkola (FI); TANG, Haitao, FI-02660 Espoo (FI); VARONEN, Kaisa, FI-02620 Espoo (FI); SEITTENRANTA, Pasi Kari, FI-02340 Espoo (FI); PARKKALI, Rauli Juhani, FI-00250 Helsinki (FI)
(74) Representative: Nokia EPO representatives
(86) International application number: PCT/EP2012/070332
(87) International publication number: WO 2014/056551

(56) References cited:
- EP-A1- 2 429 237
- EP-A1- 2 434 826
- WO-A2-2010/144833
- US-A1- 2010 157 898

## Description

This disclosure relates to a method and apparatus and in particular but not exclusively to method and apparatus for use in for example network management.

EP2434826 discloses indicating quality perceived by a user depending on allocated data rate, preferably also depending on channel condition, performing an optimizing operation, to obtain an overall optimized resource allocation. WO2010144833 discloses a system for mitigating effects of various interference scenarios in a capacity and spectrum constrained, multiple-access communication network. US2010157898 discloses a gateway estimates quality of communications between it and at least one computer in a first network and determines a priority for communications between the gateway and at least one terminal in a second network according to the estimated quality of the communications.

A communication system can be seen as a facility that enables communication sessions between two or more entities such as fixed or mobile communication devices, base stations, servers, machine type communication devices and/or other communication nodes. A communication system and compatible communicating entities typically operate in accordance with a given standard or specification which sets out what the various entities associated with the system are permitted to do and how that should be achieved. For example, the standards, specifications and related protocols can define the manner how various aspects of communication such as access to the communication system and feedback messaging shall be implemented between communicating devices. The various development stages of the standard specifications are referred to as releases.

A communication can be carried on wired or wireless carriers. In a wireless communication system at least a part of communications between stations occurs over a wireless link. Examples of wireless systems include public land mobile networks (PLMN) such as cellular networks, satellite based communication systems and different wireless local networks, for example wireless local area networks (WLAN). A wireless system can be divided into cells or other radio coverage or service areas provided by a station. Radio service areas can overlap, and thus a communication device in an area can send and receive signals within more than one station. Each radio service area is controlled by an appropriate controller apparatus. Higher level control may be provided by another control apparatus controlling a plurality of radio service area.

A wireless communication system can be accessed by means of an appropriate communication device. A communication device of a user is often referred to as user equipment (UE) or terminal. A communication device is provided with an appropriate signal receiving and transmitting arrangement for enabling communications with other parties. Typically a communication device is used for enabling receiving and transmission of communications such as speech and data. In wireless systems a communication device provides a transceiver station that can communicate with another communication device such as e.g. a base station and/or another user equipment.

Currently the user equipment is controlled based on radio conditions and quality experienced by a particular user equipment is not taken into account.

The invention is defined in the appended set of claims.The embodiments and/or examples of the following description which are not covered by the appended claims are considered as not being part of the present invention.

The quality conditions experienced by said user equipment may comprise one or more of throughput, call success rate, call setup success/failure rate, handover success/failure rate, and number of radio link failures.

One or more usage conditions may relate to one or more of load distribution, type of application, type of service, traffic profile, consumed data, and exceeded data quota.

The one or more parameters may comprise one or more of a quality control parameter, a priority information parameter, and a resource management parameter.

The one or more parameters may be for controlling one or more of scheduling of said user equipment, admission of said user equipment to a network, mobility load balancing and traffic steering.

The one or more parameters may comprise one or more subscription profile parameters.

The at least one memory and the computer code may be configured to cause change information to be sent to a database of subscription profile parameters.

The at least one memory and the computer code may be configured to use said usage condition information and said network performance information.

The at least one memory and the computer code may be configured to determine if said usage condition information and/or said network performance information satisfies a requirement and if said information satisfies said requirement to cause said change.

The requirement may comprise one or more of falling within a range, falling outside a range, exceeding a threshold, meeting a threshold and falling below a threshold.

The at least one memory and the computer code may be configured to receive a plurality of said usage condition information and/or said network performance information, said plurality of information being of different types, and to determine for said information of said different types if said respective type of information satisfies a respective requirement.

The plurality of different types of information may be provided with a priority and the method may comprise using said priority when using said information to cause said change.

The at least one memory and the computer code may be configured to select a subset of said different types of information to use to cause said change.

The usage condition information may be determined using one or more of probing, tracing, charging, deep packet inspection, and performance management techniques.

The at least one memory and the computer code may be configured to receive information to trigger a traffic steering action.

According to another aspect there is provided an apparatus comprising at least one processor and at least one memory including computer code for one or more programs, the at least one memory and the computer code configured, with the at least one processor, to cause the apparatus at least to: receive information relating to one or more parameters which individually control a user equipment, said parameters being radio resource management parameters and being dependent on usage condition information relating to said user equipment and/or network performance information; and causing the user equipment to be controlled in accordance with said one or more parameters.

According to another aspect there is provided an apparatus comprising: a store of one more parameters which individually controlling a user equipment, said parameters being radio resource management parameters; and an input configured to receive information to cause a change in one or more of said parameters, said information to cause said change being dependent on usage condition information relating to said user equipment and/or network performance information.

The apparatus may be provided in a subscriber profile repository.

According to another aspect, there is provided a system in a communications network comprising: a first apparatus comprising: a store of one or more parameters which individually control said user equipment, said parameters being radio resource management parameters; and a second apparatus comprising at least one processor and at least one memory including computer code for one or more programs, the at least one memory and the computer code configured, with the at least one processor, to cause the second apparatus at least to: receive at least one of a) usage condition information relating to one or more usage conditions of said user equipment and b) network performance information; and use said information to cause a change in one or more parameters stored in said store.

According to an aspect there is provided an apparatus comprising: means for receiving at least one of a) usage condition information relating to one or more usage conditions of a user equipment and b) network performance information; and means for using said received information to cause a change in one or more parameters which individually control a or said user equipment, said parameters being radio resource management parameters.

The one or more usage conditions may comprise one or more quality conditions experienced by said user equipment and/or one or more traffic related conditions.

The quality conditions experienced by said user equipment may comprise one or more of throughput, call success rate, call setup success/failure rate, handover success/failure rate, and number of radio link failures.

One or more usage conditions may relate to one or more of load distribution, type of application, type of service, traffic profile, consumed data, and exceeded data quota.

The one or more parameters may comprise one or more of a quality control parameter, a priority information parameter, and a resource management parameter.

The one or more parameters may be for controlling one or more of scheduling of said user equipment, admission of said user equipment to a network, mobility load balancing and traffic steering.

The one or more parameters may comprise one or more subscription profile parameters.

The using means may be for causing change information to be sent to a database of subscription profile parameters.

The using means may use said usage condition information and said network performance information.

The using means may be for determining if said usage condition information and/or said network performance information satisfies a requirement and if said information satisfies said requirement for causing said change.

The requirement may comprise one or more of falling within a range, falling outside a range, exceeding a threshold, meeting a threshold and falling below a threshold.

The receiving means may be for receiving a plurality of said usage condition information and/or said network performance information, said plurality of information being of different types, and the using means may be for determining for said different information if said respective type of information satisfies a respective requirement.

The plurality of different types of information may be provided with a priority and the using means may be for using said priority when using said information to cause said change.

The using means may be for selecting a subset of said different types of information to use to cause said change.

The usage condition information may be determined using one or more of probing, tracing, charging, deep packet inspection, and performance management techniques.

The receiving means may be for receiving information to trigger a traffic steering action.

A computer program comprising program code means adapted to perform the methods may also be provided.

According to an aspect there is provided a method in a communications network comprising: receiving at least one of a) usage condition information relating to one or more usage conditions of a user equipment and b) network performance information; and using said received information to cause a change in one or more parameters which individually controls a or said user equipment, said parameters being for use in radio resource management.

Various other aspects and further embodiments are also described in the following detailed description and in the attached claims.

Embodiments will now be described in further detail, by way of example only, with reference to the following examples and accompanying drawings, in which:
Figure 1 shows a schematic diagram of a system;
Figure 2 shows a method; and
Figure 3 schematically shows control apparatus.

Some embodiments may relate to customer experience based user prioritization and differentiation. User prioritization may be where resource allocation is based on measured customer experience.

Currently technologies such as 2G, 3G, LTE and WLAN specify which mobility features are supported and how mobility procedures are managed in idle and active modes, and inter frequency and inter RAT (radio access technology) cases. For example which entity initiates and makes mobility decisions and related activity such as measuring radio conditions are currently technology dependent functions.

Currently users are prioritized and resources allocated based on radio conditions and services. However the quality experienced by the user is not taken into account.

Currently packet scheduling and traffic steering are made based on radio performance, and used service and customer group (RFSP ID - RAT (radio access technology) frequency selection priority index). Users are not individually controlled. Policy control may guarantee QoS, but only at the bearer level.

Some embodiments may provide a mechanism for customer experience based individual RRM. Some embodiments allow a user equipment to be individually controlled responsive to said customer experience and/or network performance. The customer experience may be regarded as usage condition information associated with a user equipment. Some examples of customer experience or usage condition information are described later.

Some embodiments may be performed automatically by a SON (self-organising network) type loop. Some embodiments may collect customer insight data from the network, network fault data, performance data and/or static subscriber data from other systems such as CRM (customer relationship management) and/or charging. In some embodiments, the subscription profile may be adjusted accordingly. This may mean that the network registers (HSS/HLR- Home subscriber server/home location register) may need to be updated in response to the change in the profile. In some embodiments changes in subscription profile parameters may then be provided to one or more relevant network elements. These one or more relevant network elements may be performing RRM (Radio Resource Management) related function and may for example be base stations. The subscription profile parameters are for controlling the UE. In some embodiments these subscription profile parameters may control the radio resource management for the UE as will be described in more detail later. These parameters may be regarded as radio resource management parameters.

Some embodiments provide a method to adjust subscription information impacting on RRM decisions based on customer insights. Taking into account subscription, customer experience and/or overall network situation may optimize customer experience and/or provide better operator strategies for different situation such as overload, application usage, resource outage and/or the like. It should be appreciated that radio resource management may comprise one or more of traffic steering, load balancing, admission control, load control, packet scheduling and the like.

A core function may have a capability to analyse customer insights (for example subscription and customer experience), network performance and/or other related data and to take action to make changes by adjusting subscription parameters in HSS/HLR. In some embodiments action is taken automatically, in a SON like loop.

Other features of the core function are to:
retrieve customer insight KPIs (Key Performance Indicator) and optionally to utilize the network performance and/or fault data; and/or
provide a HSS/HLR capability

The core functions may run on one or more logical elements. These one or more logical elements will be referred to as a CEMO (Customer Experience Management Optimizer). The CEMO may be provide as a separate entity, be provided by one or more existing entities or may be provided by a plurality of entities.

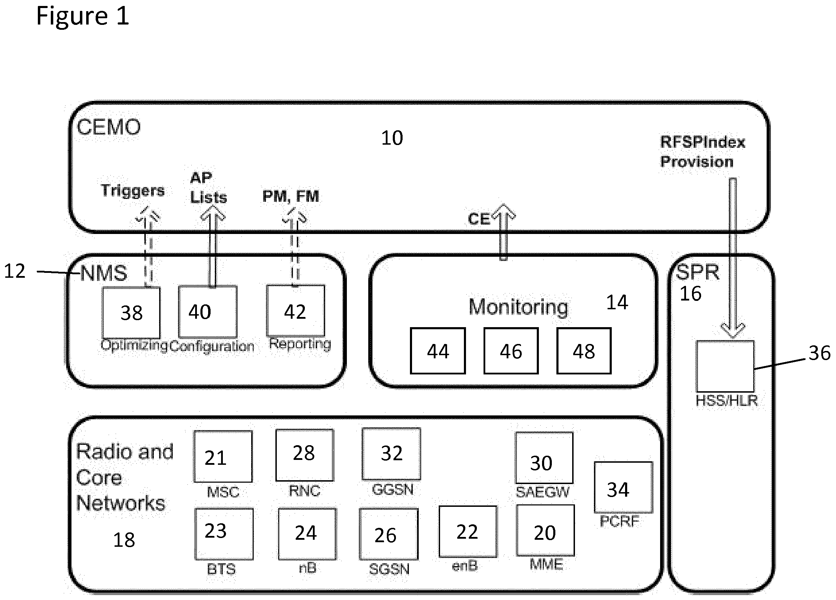

Reference is made to figure 1 which shows a system of an embodiment. The system of the embodiment comprises a CEMO 10, an NMS (network management system) 12, a monitoring function 14, a radio and core network 18 and a SPR (subscription profile repository) 16. The SPR 16 comprises HLR and/or HSS registers 36. The HLR/HSS 36 may be updated by the CEMO, as will be described in more detail later.

The radio and core network 18 may comprise one or more of the following entities: MME (mobility management entity) 20; MSC (mobile switching centre) 21; eNB (eNode B) 22; BTS (base station) 23; NB (NodeB) 24; SGSN (serving GPRS (general packet radio service) service node) 26; RNC (radio network controller) 28; SAE GW (system architecture evolution Gateway) 30; GGSN (Gateway GPRS service node) 32; and PCRF (policy and charging rules function) 34. The functions provided (and the naming of those functions) will depend on the standard supported. At least some of the entities shown in Figure 1 are 3GPP entities. However it should be appreciated that embodiments may alternatively or additionally be used with any other suitable standard. By way of example, some embodiments may be used with WLAN (wireless local area network, WiMax, GSM and/or the like.

The monitoring function 14 may provide customer experience CE information to the CEMO. The monitoring function may comprise one or more functions. In the example shown, the monitoring function comprises a first function 44, a second function 46 and a third function 48. These three functions will be described in more detail later.

The NMS 12 comprises an optimization function 38 which provides information to trigger prioritizing actions to the CEMO. The NMS 12 also comprises a configuration function 40 which provides information such as AP (access point) lists to the CEMO. The NMS also comprises a reporting function 42 which is used to report network performance PM and fault FM data to the CEMO. The functions provided by the NMS will be described in more detail later.

The CEMO would use a data collection functions 44 and a data storage function 46 of the monitoring function to monitor and collect event level data from different network elements and provide that data to the CEMO. The network management system (NMS) 12 is able to provide network performance (PM) and fault management (FM) data. These monitoring and NMS functions may be vendor specific and run on top of Radio (RN) and Core Networks (CN) 18.

Standardized RN and CN elements such as shown in Figure 1 typically have measurements from a relatively short time period. These measurements provide information as to what is happening currently in the network and what a customer is experiencing at a particular moment. Currently, network elements typically have only relevant information that is necessary to perform the function for which that network element is responsible. Hence such network elements may lack knowledge as to what has happened, what is seen in other network elements and do not necessarily have all the information that could be used for example to improve customer experience. For example a base station knows the current radio condition in a cell and surrounding cells as well as used services by the users. However, a base station has little information about customer experience.

In some embodiments, customer experience is used to determine and/or adjust subscription parameters. This customer experience is thus related to a specific user equipment.

The monitoring function collects customer related data and stores data from the network elements (for example events from network elements). For example, the monitoring function may collect:
- from one or more Gateways (GGSN, SAEGW): traffic data such as one or more of used application, data volume, data type, APN (access point name), time, bearer data, QoS (quality of service), IPs and the like.
- from the MME/SGSN: MM (mobility management) and/or SM (session management) events and/or related data such as one or more of attach time, detach time, success/failure, PDP/PDN (packet data protocol/packet data network) context activation/deactivation time and success/failure, QoS and the like.

Relevant customer experience insight may be derived from one or more of these measurements.

In some embodiments the CEMO 10 gets aggregated data/KPIs (from the monitoring function 14), and network PM and FM (e.g. from Network management system 12). This may happen in the background. This data may be stored in a data store of the CEMO and used when needed, and/or the data may be retrieved from the data sources when required. For example, when an algorithm is triggered, the data may be retrieved. The CEMO performs one or more algorithms (which are described later in more detail). The CEMO may decide what to do, the list of subscribers which are affected, a validity period of the change and/or parameters which are to be changed. The CEMO then causes changes to HSS/HLR 36. Changes in the subscriptions may then be transferred to one or more relevant network elements of the radio and core network 18. These changes may be transferred to the one or more network elements through a standard interfaces (for example to the MME 20, to the SGSN 26 and/or to the MSC 21/VLR).

A RRM function that is implemented in the base station may utilize the provided parameters for example QoS parameters or RFSP Index.

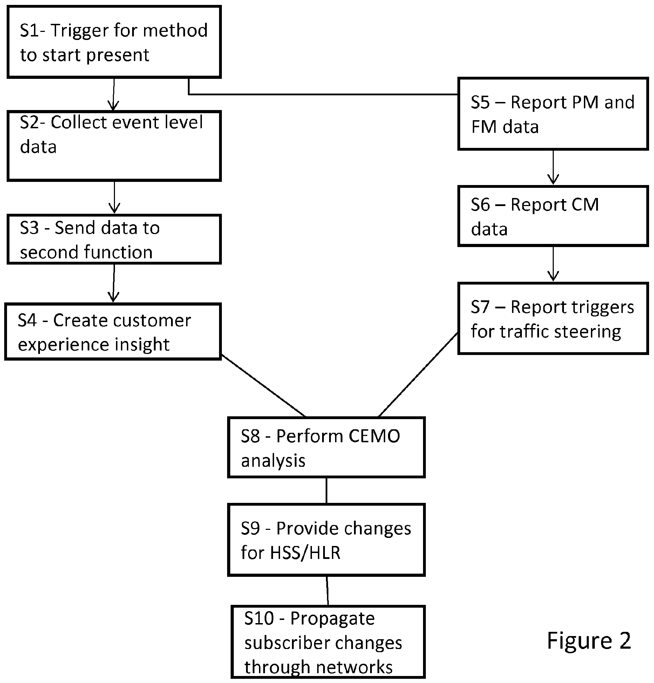

The CEMO may perform a method. One example of this method is shown in Figure 2. It should be appreciated that in some embodiments, the method may be implemented at least partially by a computer program.

In step S1, the method is started using one or more of the following criteria:
The method or algorithm may be scheduled periodically or on a given date and/or time. For example the method may be performed daily;
The method may be executed on-demand; and
The method may be triggered for example by alarms, thresholds, and/or the like. For example the method may be performed in response to an overload being determined. Overload could be detected for example based on PM statistics reported by the reporting function.

In the described method, steps are described as being triggered by the starting of the method in the CEMO. However it should be appreciated, that steps to gather data may be taking place regardless of whether the method in the CEMO has been triggered. In some embodiments, the data is stored and only provided to the CEMO when the method is triggered. In other embodiments, the data is provided to the CEMO so that when the method is triggered the data is available in the CEMO for use in the method.

In step S2, the data collection function 44 of the monitoring function 14 collects measurements (almost) in real-time from one or more different network elements such as node-B, e-NodeB, SGSN, GGSN, MME, SAE-GW, RNC and/or the like. In some embodiments, one or more of the gateways (GGSN, SAEGW, etc.) has a DPI (deep packet inspection) capability to interpret application specific data. The data may be event level data that is stored in one or more databases associated with the data collection function.

In step S3, the data collection function sends the data to the data storage function 46 of the monitoring function 14 that stores and aggregates the data in longer term data storage. DPI level data may be stored in the data storage function 46 or have its own function.

In step S4, the second function 46 may also create customer experience insight based on the received measurements.

In addition or instead to customer specific information, network performance (PM) and fault (FM) data can be also used as input for traffic steering decisions. Accordingly in step S5, the reporting function 42 reports network performance status through OM (operation and maintenance) statistics.

Configuration data (CM) provided by the configuration function 40 may also be used as input data for the method of the CEMO. For example the CM data may comprise AP lists. This may be provided to the CEMO in step S6.

The optimizing function 38 may analyse reported PM statistics and detect a possible need for traffic steering and trigger traffic steering actions. This may be reported to the CEMO in step S7. It should be appreciated that this may be one of the triggers for the method to start (see step S1).

In step S8, the information which is received by the CEMO is analysed.

In step S9, any resulting changes required to the subscription of a user equipment, are provided to the HSS/HLR for example through proprietary interfaces.

In step S10, signalling (providing Subscription parameters to network) takes place when subscription has changed through standard signalling.

In the arrangement of figure 2, steps S5, S6 and S7 are shown as taking place in a particular order. It should be appreciated that these steps can take place in any order. It should also be appreciated that two or more of these steps may be performed at the same time. In the method shown in figure 2, steps S5 to S7 are shown as taking place generally at the same time as steps S2 to S4. It should be appreciated that this is by way of example only and in other embodiments, steps S2 to S4 may take place before, or after steps S5 to S7.

In the example shown in figure 2, steps S2, S3 and S4 are described as being carried out by separate functions. In other embodiments, one or more of these steps may take place in the same function.

It should be appreciated that the NMS and Monitoring function may be replaced by one or more different functions which may be configured to provide the same or similar functions to those previously described. Some or all of the functions of the monitoring function may be provided by the NMS and vice versa.

### Subscription parameters and impact on RRM and MM procedures

HSS/HLR interfaces to network elements may be standardized but subscriber data management may be vendor specific. Provisioning of subscriber parameters requires interface to adjust existing parameters.
One or more of the following HSS/HLR parameters may be used for providing input to for example one or more of RRM and MM procedures:
Subscribed-RAT-Frequency-Selection-Priority-ID (in HSS - used in MME/eNB and SGSN);
Quality of Service QoS;
EPS (evolved packet system) QoS such as QCI (QoS identifier) and ARP (allocation and retention priority), GBR (Guaranteed Bit rate), MBR (Maximum Bit Rate), AMBR (Aggregated Maximum Bit Rate);
Access Restriction Data (HSS/HLR used in VLR, SGSN and MME); and
Closed Subscriber Group Information (in HLR/HSS used in VLR or SGSN or MME).

It should be appreciated that these parameters are provided as examples. In some embodiments any subscriber parameter in the HSS/HLR may be used.
Each user equipment or user may have assigned a user specific Subscriber RFSP-ID value in HSS (EPS 3GPP access) and HLR (GPRS access). The RFSP Index is a conditional parameter in HLR/HSS, Gn/Gp-SGSN, and MME and in some embodiments may have 256 different values, i.e. there can be 256 different index values that can be assigned to a user. The RFSP Index value in the HSS EPS profile can be configured by providing values directly to HSS user profile. The RFSP Index is mapped by the eNodeB/BSC (base station controller)/RNC to locally defined configuration in order to apply specific RRM strategies, e.g. traffic steering.

Some embodiments may use current mechanisms. For example one or more of the following mechanisms may be used.

The HSS may provide a number of subscriber parameters (which may be modified by the CEMO) to base station through MME like QCI (QoS parameters) or RFSP index. A RRM algorithms and scheduler may use these as input parameters to decision algorithms. Since there are other input parameters as well, this CEMO modified parameters may indirectly impact on UE behaviour. This allows optimizing in an active mode, for example.
The RFSP index (mapped to an AP list) that is provided from the HSS to base station through MME could be mapped to AP (Absolute Priority lists) in base station and sent in a message to the user equipment. For example the message may be an RRC connection release (LTE 3GPP 36.331) message. The AP list is a list of RAT/frequencies with priorities. Next time UE does an attach, the UE would try to attach to RAT/frequency in a given order starting from highest priority RAT/frequency. 3GPP provides this as a reference or example usage in the standards. Since the delivery of AP list may be provided in dedicated signalling, the list can be pointed to specific users/UE and thus allow steering at the individual level. In other word the RFSP index for a specific UE may be modified to change the behaviour of the UE, by the CEMO.

Different RFPS index values are mapped to different AP lists. Some AP lists prioritize networks providing better service (e.g. LTE) and some worse (say GSM or WCDMA). For some users a better network is given by allocating corresponding RFSP index and for some others a worse network is given by again allocating the corresponding RFSP index.

Alternatively or additionally, the AP list for defining neighbour measurements in for example a MeasConf IE (measurement configuration information element) in RRC message may be used. This forces a UE to measure only the defined given neighbours. Since the eNB (base station) may makes the MM decision (inter frequency HO (handover), IRAT HO, initial set-up) based on UE measurement, this may impact on selected RAT/frequency.

In some embodiments, there may additionally or alternatively be reconfiguration of an AP list based on customer experience. In this case entries in the AP list are changed to have to customer experience. In this case customer experience cannot be controlled based on individual user customer experience, but it is based on measurements for a group of users using for example the same RFSP index.

Some embodiments may take individual customer insights and/or network performance data into account when adjusting individual subscriber parameters that are impacting on procedures. By way of example, these procedures may comprise radio resource management RRM procedures. This may include the usual RRM procedures such as set out for example standards; mobility load balancing (a SON function)- in this case users that are offloaded from an overloaded cell are prioritized with a RFPS index; and admission/load control (RRM)- in this case users that are admitted to a loaded cell are selected based on their RFSP index.

In some embodiments a method uses logic that is able to process customer insights, KPIs, alarms etc. from various data sources (see for example Figure 2) and makes a decision if parameters need to be adjusted accordingly.

Below are some use case examples, based on providing user specific RFSP Index values in HSS. A User specific RFSP Index is maintained separately for each user in a user specific EPS profile at HSS. A User specific network selection priority could be changed when CEMO has measured and identified one or more of the following:

### • Subscriber class and time interval

This criterion gives a default setting for a RFSP index based on user's subscriber class and/or time. The operator can configure these values.

For example:
Work days: column 1
Weekends and holiday seasons: column 2

| RFSP Index | Workdays | Weekends |
|---|---|---|
| 1 | LTE 3G 2G | LTE 3G 2G |
| 2 | 3G LTE 2G | LTE 3G 2G |
| 3 | 2G LTE 3G | 2G LTE 3G |

### • Exceeded quota

In this criterion, an appropriate RAT for a subscriber is selected based on user's subscriber class and/or consumed bandwidth, data consumption or the like. If a user has limited quota in his/her contract, exceeding that quota may trigger the user to be moved to another RAT. The operator can configure a RFSP Index value that corresponds to entry in the AP table describing the desired action for that UE.

### • Load distribution

This may be used where the operator defines or has limits for total load in each network. These limits may for example be absolute throughput numbers that reflect the capacity and/or capabilities of the networks. When a limit is exceeded, the algorithm or method tends to prioritize the corresponding network less frequently by changing the RFSP Index value that corresponds to the entry in the AP table causing shift of the load to the desired direction.

### • User's traffic profile

The users' traffic is profiled (e.g. application protocols and/or data volumes) and users are categorized based on their traffic history. The suitability of the RATs (and/or frequency bands) for each category traffic is described in a table. Table configuration can be based on knowledge of application/service requirements and RAT characteristics. The aim of the criterion can be to offer adequate user experience or any other objective set by the operator.

### • Unwanted applications and services

With this criterion, an operator can discourage use of certain kind of applications and services, e.g. P2P peer-to-peer or gambling site.
An example of a flow of operation is as follows:
1. Receive measurements of each user's traffic and sum up the amount of unwanted traffic. Unwanted traffic is detected based on used application protocol identity, visited site address or by some other method.
2. Compare the amount of unwanted traffic with a threshold value and set the status flag accordingly. The threshold value may depend on the user class.
3. Set the RFSP id values as in the "exceeded quota" criterion above.

### • User experience - call success rate

Failure statistics such as number of attach failures is used to calculate or estimate user's call success rate in each used RAT and frequency band. If a call success rate is low, the RFSP index may be changed to avoid use of corresponding RAT and/or frequency. Other examples may be call setup success/failure rate, handover success/failure rate, and/or number of radio link failures.

### • User experience - average throughput

This criterion attempts to keep average throughput of a user within predefined limits for the user class. It is based on the assumption that used average bit rate correlates with degree of user satisfaction. RFSP index changes are used to affect the throughput.
Described method needs to rank networks by speed. Either a priori knowledge of RAT performance can be used (2G is slowest and LTE is fastest) or throughput statistics is collected to predict user's throughput in each network and an appropriate RFSP index selected that would lead to desired action in the UE.

Various of the above criteria check if a value meets a requirement. The meeting of said requirement may comprise one or more of falling within a range, falling outside a range, exceeding a threshold, meeting a threshold and falling below a threshold.

### • Combination of above

Any two or more of the above criteria may be combined.

The above criteria are by way of example only and different criteria may be used in different embodiments.

When a need to changing a priority for a user is detected, a new RFSP Index value is provisioned to user profile in HSS.

In some embodiments, there can be more than one criteria used for determining an overall results. In some embodiments, logic may be provided for combining the results of different criteria.

Example of combined criteria will now be discussed.

The approach of this method is to first infer suitable networks (RAT and frequency band) for a user RFSP indexes based on each criterion alone and then aggregate the results.

A weighted aggregation operator combines individual criteria so that each network gets one performance number *pᵣ* = Agg(*p*_{1.r},*p*_{2.r}, ... , *p*_{*n*.*r*}), where *p_{c, r}* is a "degree of fulfilment" value that describes suitability of the network *r* based on criterion *c.* These performance numbers are used to rank the networks in descending order (random order in case of equality). Then the best matching AP list and corresponding RFSP index is selected. One example of the aggregation operator is weighted sum, where the weight describes the relative importance of the criteria. The advantage of this kind of decision making is that it is may be easy to modify the used criteria and their weighting.

A criteria for subscriber differentiation based on customer experience is now described. Customer experience is first measured for each user. If the measured customer experience is below or outside a planned range (e.g. throughput is below target), a CEMO provides new values for HSS parameters (e.g. QCI value) that have an impact to the scheduling decisions in the base station/ RNC and/or BSC.

Alternatively or additionally, the CEMO provides a new value to RFSP index that is then used as a scheduling weight in the packet scheduler in the base station/RNC and/or BSC.

In some embodiments, the HSS/HLR interface will receive information changing subscriber parameters. These changed parameters will be propagated via the relevant interface or interfaces to the network elements which need that information. It should be appreciated that alternatively or additionally the subscriber profile parameters may be stored in any other suitable data store or database.

Some embodiments have been described as using RFSP index information to allow the behaviour of an individual UE to be controlled. It should be appreciated that this is only an example of a mechanism which can be used to control the UE.

Some embodiments may determine changes to parameter stored in the HSS/HLR in the core network. However in alternative embodiments the change may be determined outside the core network by for example a server or in the RAN.

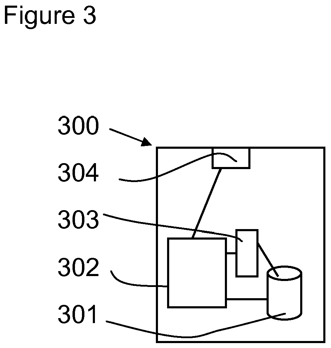

One or more entities of may be provided with a control apparatus. Figure 3 shows an example of a control apparatus. The control apparatus 400 can be configured to provide control functions. For this purpose the control apparatus 400 comprises at least one memory 301, at least one data processing unit 302, 303 and an input/output interface 304. Via the interface the control apparatus can be coupled to receive information and/or commands and/or provide as output information and/or commands. The control apparatus 400 can be configured to execute an appropriate software code to provide the control functions. The CEMO may comprise control apparatus.

The required data processing apparatus and functions of any of the functions shown in Figure 1 may be provided by means of one or more data processor. The described functions may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory. An appropriately adapted computer program code product or products may be used for implementing the embodiments, when loaded or otherwise provided on an appropriate data processing apparatus. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments may be practiced in various components such as integrated circuit modules. The design of integrated circuits is by and large an automated process. Complex and powerful tools are available for converting a logic level design into a semiconductor circuit design ready to be formed on a semiconductor substrate.

It is noted that whilst embodiments have been described in relation to particular standards similar principles can be applied to any other communication system. Therefore, although certain embodiments were described above by way of example with reference to certain exemplifying architectures for wireless networks, technologies and standards, embodiments may be applied to any other suitable forms of communication systems than those illustrated and described herein.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. For example, a combination of one or more of any of the other embodiments previously discussed can be provided. All such and similar modifications of the teachings of this invention will still fall within the scope of this invention as defined in the appended claims.

## Claims

1. A method effected in a communication network by a Customer Experience Management Optimizer, CEMO, entity comprising a control apparatus, the method comprising:
receiving at least one of a) usage condition information (S4) relating to one or more usage conditions of a user equipment, and b) network performance information (S5); and
using said received information (S4, S5) to cause a change (S9) in one or more subscription profile parameters which control radio resource management for said user equipment.

2. A method as claimed in claim 1, wherein said one or more usage conditions (S4) comprise one or more quality conditions experienced by said user equipment and/or one or more traffic related conditions.

3. A method as claimed in claim 2, wherein quality conditions experienced by said user equipment comprise one or more of throughput, call success rate, call setup success/failure rate, handover success/failure rate, and number of radio link failures.

4. A method as claimed in any preceding claim, wherein said one or more usage conditions (S4) relate to one or more of load distribution, type of application, type of service, traffic profile, consumed data, and exceeded data quota.

5. A method as claimed in any preceding claim, wherein the radio resource management comprises at least one of: traffic steering, load balancing, admission control, load control, and packet scheduling for said user equipment.

6. A method as claimed in claim 5, wherein the traffic steering comprises at least one of: selection of radio access technology for idle mode camping and steering said user equipment from one radio access technology to another.

7. A method as claimed in claim 1, further comprising storing said change (S9) in said one or more subscription profile parameters in a subscription profile parameters database.

8. A method as claimed in any preceding claim, wherein said using comprises using said usage condition information (S4) and said network performance information (S5).

9. A method as claimed in any preceding claim, wherein said using comprises determining if said usage condition information (S4) and/or said network performance information (S5) satisfies a requirement and if said information satisfies said requirement causing said change.

10. A method as claimed in claim 9, wherein said requirement comprises one or more of falling within a range, falling outside a range, exceeding a threshold, meeting a threshold and falling below a threshold.

11. A method as claimed in claim 9 or 10, comprising receiving a plurality of said usage condition information (S4) and/or said network performance information (S5), said plurality of information (S4, S5) being of different types, and determining for said information (S4, S5) of said different types if said respective type of information (S4, S5) satisfies a respective requirement.

12. A method as claimed in any preceding claim wherein said usage condition information (S4) is determined using one or more of probing, tracing, charging, deep packet inspection, and performance management techniques.

13. A control apparatus (400) comprising at least one processor (302) and at least one memory (301) including computer code for one or more programs, the at least one memory (301) and the computer code configured, with the at least one processor (302), to cause the apparatus at least to:
receive at least one of a) usage condition information (S4) relating to one or more usage conditions of a user equipment and b) network performance information (S5); and
use said received information (S4, S5) to cause a change (S9) in one or more subscription profile parameters which control radio resource management for said user equipment.

14. An apparatus provided in a subscriber profile repository, comprising:
a store (16) configured to store of one or more subscription profile parameters which individually control radio resource management for a user equipment; and
an input interface (304) configured to receive information (S4, S5) to cause a change (S9) in one or more of said subscription profile parameters, said information (S4, S5) to cause said change being dependent on usage condition information (S4) relating to said user equipment and network performance information (S5).

## Patentansprüche

1. Verfahren, das in einem Kommunikationsnetzwerk durch eine Customer-Experience-Management-Optimizer (Kundenerfahrungsverwaltungsoptimierer- bzw. CEMO-Entität), die eine Steuervorrichtung umfasst, durchgeführt wird, wobei das Verfahren Folgendes umfasst:
Empfangen von a) Nutzungsbedingungsinformationen (S4) bezüglich einer oder mehrerer Nutzungsbedingungen eines Benutzergeräts und/oder b) Netzwerkleistungsinformationen (S5); und
Verwenden der empfangenen Informationen (S4, S5), um eine Änderung (S9) in einem oder mehreren Subskriptionsprofilparametern zu bewirken, die eine Funkressourcenverwaltung für das Benutzergerät steuern.

2. Verfahren nach Anspruch 1, wobei die eine oder die mehreren Nutzungsbedingungen (S4) eine oder mehrere Qualitätsbedingungen, die durch das Benutzergerät erfahren werden, und/oder eine oder mehrere verkehrsbezogene Bedingungen umfassen.

3. Verfahren nach Anspruch 2, wobei durch das Benutzergerät erfahrene Qualitätsbedingungen Durchsatz und/oder Anruferfolgsrate und/oder Anrufaufbauerfolgs-/-fehlschlagsrate und/oder Handover-Erfolgs-/-fehlschlagsrate und/oder Anzahl von Funkverbindungsfehlschlägen umfassen.

4. Verfahren nach einem vorangegangenen Anspruch, wobei sich die eine oder die mehreren Nutzungsbedingungen (S4) auf eine Lastverteilung und/oder einen Anwendungstyp und/oder einen Diensttyp und/oder ein Verkehrsprofil und/oder verbrauchte Daten und/oder überschrittenes Datenkontingent beziehen.

5. Verfahren nach einem vorangegangenen Anspruch, wobei die Funkressourcenverwaltung mindestens eines von Folgendem umfasst: Verkehrslenkung, Lastausgleich, Zulassungssteuerung, Laststeuerung und Paket-Scheduling für das Benutzergerät.

6. Verfahren nach Anspruch 5, wobei die Verkehrslenkung mindestens eines von Folgendem umfasst: Auswahl einer Funkzugangstechnologie zum Ruhemodus-Campen und Lenken des Benutzergeräts von einer Funkzugangstechnologie zu einer anderen.

7. Verfahren nach Anspruch 1, ferner umfassend Speichern der Änderung (S9) in dem einen oder den mehreren Subskriptionsprofilparametern in einer Subskriptionsprofilparameterdatenbank.

8. Verfahren nach einem vorangegangenen Anspruch, wobei das Verwenden ein Verwenden der Nutzungsbedingungsinformationen (S4) und der Netzwerkleistungsinformationen (S5) umfasst.

9. Verfahren nach einem vorangegangenen Anspruch, wobei das Verwenden ein Bestimmen, ob die Nutzungsbedingungsinformationen (S4) und/oder die Netzwerkleistungsinformationen (S5) eine Anforderung erfüllen, und, falls die Informationen die Anforderung erfüllen, ein Bewirken der Änderung umfasst.

10. Verfahren nach Anspruch 9, wobei die Anforderung eines oder mehrere der Folgenden umfasst: Fallen innerhalb eines Bereichs, Fallen außerhalb eines Bereichs, Überschreiten einer Schwelle, Erfüllen einer Schwelle und Fallen unter eine Schwelle.

11. Verfahren nach Anspruch 9 oder 10, umfassend Empfangen von mehreren der Nutzungsbedingungsinformationen (S4) und/oder der Netzwerkleistungsinformationen (S5), wobei die mehreren Informationen (S4, S5) unterschiedliche Typen aufweisen, und Bestimmen, für die Informationen (S4, S5) mit unterschiedlichen Typen, ob der jeweilige Typ von Informationen (S4, S5) eine jeweilige Anforderung erfüllt.

12. Verfahren nach einem vorangegangenen Anspruch, wobei die Nutzungsbedingungsinformationen (S4) unter Verwendung von Sondierungs- und/oder Tracing- und/oder Gebührenberechnungs- und/oder Deep-Packet-Inspection- und/oder Leistungsverwaltungstechniken bestimmt werden.

13. Steuervorrichtung (400), die mindestens einen Prozessor (302) und mindestens einen Speicher (301) einschließlich Computercode für ein oder mehrere Programme umfasst, wobei der mindestens eine Speicher (301) und der Computercode mit dem mindestens einen Prozessor (302) dazu ausgelegt sind, die Vorrichtung zumindest zu Folgendem zu veranlassen:
Empfangen von a) Nutzungsbedingungsinformationen (S4) bezüglich einer oder mehrerer Nutzungsbedingungen eines Benutzergeräts und/oder b) Netzwerkleistungsinformationen (S5); und
Verwenden der empfangenen Informationen (S4, S5), um eine Änderung (S9) in einem oder mehreren Subskriptionsprofilparametern zu bewirken, die eine Funkressourcenverwaltung für das Benutzergerät steuern.

14. Vorrichtung, die in einem Teilnehmerprofilrepositorium bereitgestellt ist, umfassend:
eine Speicherung (16), die dazu ausgelegt ist, ein oder mehrere Subskriptionsprofilparameter, die einzeln eine Funkressourcenverwaltung für ein Benutzergerät steuern, zu speichern; und
eine Eingangsschnittstelle (304), die dazu ausgelegt ist, Informationen (S4, S5) zu empfangen, um eine Änderung (S9) in einem oder mehreren der Subskriptionsprofilparameter zu bewirken, wobei die Informationen (S4, S5) zum Bewirken der Änderung von Nutzungsbedingungsinformationen (S4) bezüglich des Benutzergeräts und Netzwerkleistungsinformationen (S5) abhängen.

## Revendications

1. Procédé effectué dans un réseau de communication par une entité d'un optimiseur de gestion d'expérience client, CEMO, comprenant un appareil de commande, le procédé comprenant :
la réception d'au moins l'une a) d'une information de condition d'utilisation (S4) concernant une ou plusieurs conditions d'utilisation d'un équipement utilisateur et b) d'une information de performance de réseau (S5) ; et
l'utilisation de ladite information reçue (S4, S5) pour provoquer un changement (S9) dans un ou plusieurs paramètres de profil d'abonnement qui commandent la gestion de ressources radio pour ledit équipement utilisateur.

2. Procédé selon la revendication 1, dans lequel ladite une ou lesdites plusieurs conditions d'utilisation (S4) comprennent une ou plusieurs conditions de qualité subies par ledit équipement utilisateur et/ou une ou plusieurs conditions liées au trafic.

3. Procédé selon la revendication 2, dans lequel les conditions de qualité subies par ledit équipement utilisateur comprennent un ou plusieurs éléments parmi un débit, un taux d'appels aboutis, un taux de succès/échec d'établissement d'appel, un taux de succès/échec de transfert et un nombre de défaillances de liaison radio.

4. Procédé selon l'une quelconque des revendications précédentes, dans lequel ladite une ou lesdites plusieurs conditions d'utilisation (S4) concernent un ou plusieurs éléments parmi une répartition de charge, un type d'application, un type de service, un profil de trafic, des données consommées et un quota de données dépassé.

5. Procédé selon l'une quelconque des revendications précédentes, dans lequel la gestion de ressources radio comprend au moins un élément parmi : une orientation de trafic, un équilibrage de charge, une commande d'admission, une commande de charge et une planification de paquets pour ledit équipement utilisateur.

6. Procédé selon la revendication 5, dans lequel l'orientation de trafic comprend au moins un élément parmi : une sélection d'une technologie d'accès radio pour une attente en mode repos et une orientation dudit équipement utilisateur d'une technologie d'accès radio vers une autre.

7. Procédé selon la revendication 1, comprenant en outre le stockage dudit changement (S9) dans ledit un ou lesdits plusieurs paramètres de profil d'abonnement dans une base de données de paramètres de profil d'abonnement.

8. Procédé selon l'une quelconque des revendications précédentes, dans lequel ladite utilisation comprend l'utilisation de ladite information de condition d'utilisation (S4) et de ladite information de performance de réseau (S5).

9. Procédé selon l'une quelconque des revendications précédentes, dans lequel ladite utilisation comprend la détermination si ladite information de condition d'utilisation (S4) et/ou ladite information de performance de réseau (S5) répond à une exigence et si ladite information répond à ladite exigence, le fait de provoquer ledit changement.

10. Procédé selon la revendication 9, dans lequel ladite exigence comprend un ou plusieurs éléments parmi le fait de tomber dans une plage, de tomber en dehors d'une plage, de dépasser un seuil, d'atteindre un seuil et de tomber au-dessous d'un seuil.

11. Procédé selon la revendication 9 ou 10, comprenant la réception d'une pluralité desdites informations de condition d'utilisation (S4) et/ou desdites informations de performance de réseau (S5), ladite pluralité d'informations (S4, S5) étant de différents types, et la détermination pour lesdites informations (S4, S5) desdits différents types si ledit type respectif des informations (S4, S5) répond à une exigence respective.

12. Procédé selon l'une quelconque des revendications précédentes, dans lequel lesdites informations de condition d'utilisation (S4) sont déterminées en utilisant un ou plusieurs éléments parmi un sondage, un suivi, un chargement, une inspection approfondie de paquets et des techniques de gestion des performances.

13. Appareil de commande (400) comprenant au moins un processeur (302) et au moins une mémoire (301) comprenant du code informatique pour un ou plusieurs programmes, ladite au moins une mémoire (301) et le code informatique étant configurés, par ledit au moins un processeur (302), pour amener l'appareil au moins à :
recevoir au moins l'une a) d'une information de condition d'utilisation (S4) concernant une ou plusieurs conditions d'utilisation d'un équipement utilisateur et b) d'une information de performance de réseau (S5) ; et
utiliser ladite information reçue (S4, S5) pour provoquer un changement (S9) dans un ou plusieurs paramètres de profil d'abonnement qui commandent la gestion de ressources radio pour ledit équipement utilisateur.

14. Appareil prévu dans un référentiel de profils d'abonné, comprenant :
un dispositif de mémoire (16) configuré pour stocker un ou plusieurs paramètres de profil d'abonnement qui commandent individuellement la gestion de ressources radio pour un équipement utilisateur ; et
une interface d'entrée (304) configurée pour recevoir des informations (S4, S5) pour provoquer un changement (S9) d'un ou de plusieurs desdits paramètres de profil d'abonnement, lesdites informations (S4, S5) devant provoquer ledit changement étant dépendantes des informations de condition d'utilisation (S4) concernant ledit équipement utilisateur et des informations de performance de réseau (S5).
